(19) Europäisches Patentamt
European Patent Office
Office européen des brevets

(11) **EP 1 697 696 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **04798096.6**

(22) Anmeldetag: **26.11.2004**

(51) Int Cl.:
*G01C 19/56* *(2006.01)*

(86) Internationale Anmeldenummer:
**PCT/EP2004/013446**

(87) Internationale Veröffentlichungsnummer:
**WO 2005/066584 (21.07.2005 Gazette 2005/29)**

(54) **Verfahren zur Messung von Beschleunigungen unter Verwendung eines Drehraten-Corioliskreisels sowie dafür geeigneter Corioliskreisel**

Method of measuring an acceleration with the aid of a rotation rate Coriolis gyroscope and a Coriolis gyroscope for carrying out said method

Procédé de mesure d'accélérations a l'aide d'un gyroscope de Coriolis a vitesse de rotation et gyroscope de Coriolis destiné a cet effet

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **23.12.2003 DE 10360963**

(43) Veröffentlichungstag der Anmeldung:
**06.09.2006 Patentblatt 2006/36**

(73) Patentinhaber: **Northrop Grumman LITEF GmbH 79115 Freiburg (DE)**

(72) Erfinder: **HANDRICH, Eberhard 79199 Kirchzarten (DE)**

(74) Vertreter: **Müller, Frithjof E.
Müller Hoffmann & Partner
Patentanwälte
Innere Wiener Strasse 17
81667 München (DE)**

(56) Entgegenhaltungen:
**EP-A- 1 253 399     WO-A-02/16871
WO-A-02/066927     WO-A-03/014669
DE-A1- 4 442 033     DE-A1- 10 107 327**

- **GEIGER W ET AL: "New designs of micromachined vibrating rate gyroscopes with decoupled oscillation modes" 1997 INTERNATIONAL CONFERENCE ON SOLID-STATE SENSORS AND ACTUATORS. DIGEST OF TECHNICAL PAPERS. TRANSDUCERS 97. CHICAGO, IL, JUNE 16 - 19, 1997. SESSIONS 3A1 - 4D3. PAPERS NO. 3A1.01 - 4D3.14P, Bd. VOL. 2, 16. Juni 1997 (1997-06-16), Seiten 1129-1132, XP010240677 ISBN: 0-7803-3829-4**

## Beschreibung

Die Erfindung betrifft ein Verfahren zur Messung von Beschleunigungen unter Verwendung eines Drehraten-Corioliskreisels sowie einen dafür geeigneten Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Jedes Massensystem hat in der Regel eine Vielzahl von Schwingungsmoden, die zunächst voneinander unabhängig sind. Zum Betrieb des Corioliskreisels wird ein bestimmter Schwingungsmode des Massensystems künstlich angeregt, der im Folgenden als "Anregungsschwingung" bezeichnet wird. Wenn der Corioliskreisel gedreht wird, treten Corioliskräfte auf, die der Anregungsschwingung des Massensystems Energie entnehmen und damit einen weiteren Schwingungsmode des Massensystems, der im Folgenden als "Ausleseschwingung" bezeichnet wird, übertragen. Um Drehungen des Corioliskreisels zu ermitteln, wird die Ausleseschwingung abgegriffen und ein entsprechendes Auslesesignal daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise Null - rückgestellt, und die Rückstellkräfte gemessen.

Das Massensystem des Corioliskreisels (das im Folgenden auch als "Resonator" bezeichnet wird) kann hierbei unterschiedlichst ausgestaltet sein. Beispielsweise ist es möglich, ein einstückig ausgebildetes Massensystem zu verwenden. Alternativ ist es möglich, das Massensystem in zwei Schwinger aufzuteilen, die miteinander über ein Federsystem gekoppelt sind und Relativbewegungen zueinander ausführen können. Hohe Messgenauigkeiten können insbesondere mit linearen Doppelschwingersystemen erzielt werden, die aus einem gekoppelten System aus zwei linearen Schwingern bestehen. In Doppelschwingersystemen ist das Federsystem, das die beiden linearen Schwinger miteinander koppelt, im Allgemeinen so ausgestaltet, dass beide lineare Schwinger entlang einer ersten Schwingungsachse zu Schwingungen angeregt werden können, wobei der zweite Schwinger zusätzlich Schwingungen entlang einer zweiten Schwingungsachse ausführen kann, die senkrecht auf der ersten Schwingungsachse steht. Die Bewegungen des zweiten Schwingers entlang der zweiten Schwingungsachse sind hierbei als Ausleseschwingung, die Bewegungen des ersten und zweiten Schwingers entlang der ersten Schwingungsachse als Anregungsschwingung aufzufassen.

Lineare Doppelschwingersysteme weisen den Nachteil auf, dass die Schwingungen der beiden linearen Schwinger entlang der ersten Schwingungsachse Vibrationen bzw. Reflexionen im Kreiselrahmen bewirken können. Unter "Kreiselrahmen" wird hierbei eine mechanische, nicht-schwingende Struktur verstanden, in der die Schwinger "eingebettet" sind, beispielsweise ein nicht-schwingender Teil einer Siliziumscheibe. Die Vibrationen bzw. Reflexionen im Kreiselrahmen können wiederum Störungen (beispielsweise Dämpfeffekte) der Schwingerbewegungen nach sich ziehen. So können beispielsweise die Schwingungen des ersten und zweiten linearen Schwingers entlang der ersten Schwingungsachse durch externe Vibrationen und Beschleunigungen, die entlang der ersten Schwingungsachse wirken, gestört werden. Analog hierzu können externe Vibrationen und Beschleunigungen, die in Richtung der zweiten Schwingungsachse wirken, die Schwingungen des zweiten linearen Schwingers entlang dieser Schwingungsachse stören, was - genauso wie alle anderen aufgeführten Störeinflüsse - zu einer Verfälschung der gemessenen Drehrate führt.

Aus WO02/16871A1 ist ein Drehratensensor mit einem Primärschwinger, einer Probemasse und einem Sekundärschwinger bekannt, wobei der Primärschwinger so aufgehängt ist, dass er lediglich die Primärschwingung ausführen kann. Analog dazu ist der Sekundärschwinger so aufgehängt, dass er nur die Sekundärschwingung durchführen kann. Ferner ist ein Corioliskreisel mit einem ersten und einem zweiten Resonator offenbart, die jeweils als gekoppeltes System aus einem ersten linearen Schwinger, dem Primärschwinger, und einem zweiten linearen Schwinger, dem Coriolisschwinger, ausgestaltet sind. Die beiden Resonatoren sind mittels einer Primärkopplungseinrichtung mechanisch so verbunden, dass sie entlang einer gemeinsamen Schwingungsachse gegentaktisch zueinander in Schwingung versetzbar sind. Ein solcher Sensor wird zur Messung der Drehrate benutzt, wobei die Drehraten durch Abgriff und Auswertung der Auslenkungen der zweiten linearen Schwinger folgendermaßen bestimmt werden: Die beiden Resonatoren werden in zueinander gegentaktige Schwingungen entlang einer gemeinsamen Schwingungsachse versetzt, aus den Auslenkungen der zweiten Schwinger wird durch Vergleich ein Gegentakt-Auslenkungsanteil ermittelt, welcher ein Maß für die zu messende Drehrate ist und die zu messende Drehrate wird aus dem Gegentakt-Auslenkungsanteil errechnet.

Die der Erfindung zugrunde liegende Aufgabe ist, einen Corioliskreisel anzugeben, mit dem eine Störung der Ausleseschwingung, d. h. der Schwingung des zweiten linearen Schwingers in Richtung der zweiten Schwingungsachse aufgrund der oben genannten Störeinflüsse weitgehend vermieden werden kann.

Zur Lösung dieser Aufgabe stellt die Erfindung einen Corioliskreisel gemäß Patentanspruch 1 bereit. Des Weiteren stellt die Erfindung ein Verfahren zur Messung von Beschleunigungen/Drehraten unter Verwendung eines Drehraten-Corioliskreisels gemäß Patentanspruch 3 bereit. Vorteilhafte Ausgestaltungen bzw. Weiterbildungen des Erfindungsgedankens finden sich in den Unteransprüchen.

Der erfindungsgemäße Corioliskreisel weist einen ersten und einen zweiten Resonator auf, die jeweils als gekoppeltes System aus einem ersten und einem zweiten linearen Schwinger ausgestaltet sind, wobei der erste Resonator mit dem zweiten Resonator mechanisch/elektrostatisch so verbunden/gekoppelt ist, dass beide Resonatoren entlang einer gemeinsamen Schwingungsachse gegentaktig zueinander in Schwingung versetzbar sind.

Der erfindungsgemäße Corioliskreisel weist demnach ein Massensystem auf, das aus zwei Doppelschwingersystemen (d.h. aus zwei Resonatoren) bzw. aus vier linearen Schwingern besteht. Das gegentaktige Schwingen der beiden Resonatoren zueinander bewirkt hierbei, dass bei entsprechender Ausgestaltung der beiden Resonatoren der Schwerpunkt des Massensystems erhalten bleibt. Dies hat zur Folge, dass das Schwingen des Massensystems keine externen Vibrationen erzeugen kann, die wiederum Störungen in Form von Dämpfungen/Reflexionen nach sich ziehen würden. Weiterhin haben externe Vibrationen und Beschleunigungen in Richtung der gemeinsamen Schwingungsachse keinen Einfluss auf die entlang der gemeinsamen Schwingungsachse erfolgende gegentaktige Bewegung der beiden Resonatoren.

Die Kopplung des ersten Resonators mit dem zweiten Resonator kann beispielsweise über ein Federsystem erfolgen, das den ersten Resonator mit dem zweiten Resonator verbindet. Eine weitere Möglichkeit besteht darin, den ersten Resonator mit dem zweiten Resonator über ein elektrostatisches Feld zu koppeln. Beide Kopplungen können allein oder in Kombination eingesetzt werden. Es ist ausreichend, wenn beispielsweise beide Resonatoren in einem gemeinsamen Substrat ausgebildet sind, so dass die mechanische Kopplung durch eine mechanische Verbindung ersetzt wird, die durch das gemeinsame Substrat selbst gegeben ist.

Die Ausgestaltungen des ersten und des zweiten Resonators sind vorzugsweise hinsichtlich Masse und Form identisch. In diesem Fall können die beiden Resonatoren achsensymmetrisch zueinander angeordnet sein bezüglich einer Symmetrieachse, die senkrecht auf der gemeinsamen Schwingungsachse steht, d. h. der erste Resonator wird durch die Symmetrieachse auf den zweiten Resonator abgebildet. Die Erfindung ist jedoch nicht hierauf beschränkt, es ist ausreichend, wenn die beiden Resonatoren die gleiche Masse aufweisen, in ihrer Form jedoch unterschiedlich ausgestaltet sind.

Wie bereits erwähnt, sind die gekoppelten Resonatoren derart ausgestaltet, dass beide linearen Schwinger eines Resonators entlang einer ersten Schwingungsachse im Gegentakt in Schwingung versetzbar sind (Anregungsschwingung), und der zweite lineare Schwinger zusätzlich entlang einer zweiten Schwingungsachse in Schwingung versetzt werden kann (Ausleseschwingung). Wenn die erste und die zweite Schwingungsachse senkrecht aufeinander stehen, und beiden Resonatoren entlang der ersten Schwingungsachse (gemeinsame Schwingungsachse) gegentaktig zueinander in Schwingung versetzt werden, so werden die zweiten Schwinger bei Drehung des Corioliskreisels in entgegengesetzter Richtung ausgelenkt (Gegentakt-Auslenkung), wohingegen bei einer Beschleunigung des Corioliskreisels die zweiten linearen Schwinger in der gleichen Richtung ausgelenkt werden (Gleichtakt-Auslenkung). Damit ist es möglich, wahlweise Beschleunigungen oder Drehungen zu messen. Durch Auswertung eines Gleichtaktes wird die Beschleunigung, durch Auswertung eines Gegentaktes die Drehrate gemessen. Mit den Begriffen "Gleichtakt" und "Gegentakt" ist Folgendes gemeint: Bezeichnet man die Koordinaten in Anregungsrichtung mit x und in Ausleserichtung mit y, dann gilt für den Gleichtakt $x_1 = x_2$, $y_1 = y_2$, und für den Gegentakt gilt: $x_1 = -x_2$, $y_1 = -y_2$ (hierbei bezeichnet der Index "1" den ersten Schwinger, und der Index "2" den zweiten Schwinger).

Die Erfindung stellt aus diesem Grunde ein Verfahren zur wahlweisen beziehungsweise gleichzeitigen Messung von Drehraten und Beschleunigungen bereit. Dieses Verfahren verwendet einen Drehraten-Corioliskreisel, der einen ersten und einen zweiten Resonator aufweist, die jeweils als gekoppeltes System aus einem ersten und einem zweiten linearen Schwinger ausgestaltet sind, und bei dem zu ermittelnde Drehraten durch Abgriff und Auswertung der Auslenkungen der zweiten Schwinger bestimmt werden. Das Verfahren weist die folgenden Schritte auf:

- Versetzen der beiden Resonatoren in zueinander gegentaktige Schwingungen entlang einer gemeinsamen Schwingungsachse, Vergleichen der Auslenkungen der zweiten Schwinger untereinander, um einen Gegentakt-Auslenkungsanteil, der ein Maß für die zu messende Drehrate ist, und/oder einen gemeinsamen Gleichtakt-Auslenkungsanteil, der ein Maß für die zu messenden Beschleunigung ist, zu ermitteln,
- Berechnen der zu messenden Drehrate/Beschleunigung aus dem Gegentakt-Auslenkungsanteil / Gleichtakt-Auslenkungsanteil.

Der gemeinsame Gleichtakt-Auslenkungsanteil wird wie folgt ermittelt: Es wird ein erster Quadraturbias, der innerhalb des ersten Resonators auftritt, und ein zweiter Quadraturbias, der innerhalb des zweiten Resonators auftritt, bestimmt. Dann werden der erste und der zweite Quadraturbias addiert und subtrahiert, um einen gemeinsamen Quadraturbiasanteil (Gleichtaktanteil) und einen Unterschieds-Quadraturbiasanteil (Gegentaktanteil) zu bestimmen. Der gemeinsame Quadraturbiasanteil ist der zu messenden Beschleunigung proportional und entspricht dem gemeinsamen Gleichtakt-Auslenkungsanteil. Der Unterschieds-Quadraturbiasanteil (Differenz) entspricht dem Gegentakt-Auslenkungsanteil. Damit kann über den Unterschieds-Quadraturbiasanteil gleichzeitig zur Beschleunigung die Drehrate gemessen werden.

Zum besseren Verständnis des vorangehend beschriebenen Beschleunigungs-Messprinzips sei in der folgenden Beschreibung nochmals kurz auf die physikalischen Grundlagen eines Corioliskreisels anhand des Beispiels eines linearen Doppelschwingersystems eingegangen.

Corioliskreisel weisen im Allgemeinen einen Quadraturbias, d. h. einen Nullpunktfehler auf. Der Quadraturbias setzt sich hierbei aus mehreren Quadraturbias-Anteilen zusammen. Einer dieser Quadraturbias-Anteile entsteht aufgrund von Fehlausrichtungen des ersten und zweiten linearen Schwingers zueinander, die aufgrund von Fertigungstoleranzen unvermeidlich sind. Die Fehlausrichtungen der beiden Schwinger zueinander erzeugen einen Nullpunktfehler im gemessenen Drehratensignal.

Die Corioliskraft lässt sich darstellen als:

$$\vec{F} = 2m\vec{v}_s x\vec{\Omega} \qquad (1)$$

$\vec{F}$    Corioliskraft
m    Masse des Schwingers
$\vec{v}_s$    Geschwindigkeit des Schwingers
$\vec{\Omega}$    Drehrate

Ist die auf die Corioliskraft reagierende Masse gleich der schwingenden Masse und wird der Schwinger mit der Eigenfrequenz ω betrieben, so gilt:

$$2m\vec{v}_s x\vec{\Omega} = m\vec{a}_c \qquad (2)$$

Für die Schwingergeschwindigkeit gilt:

$$\vec{v}_s = \vec{v}_{s0}\sin\omega t \qquad (3)$$

mit

$\vec{v}_{s0}$    Schwingeramplitude
ω    Eigenfrequenz des Schwingers

Somit gilt für die Schwinger- und Coriolisbeschleunigungen:

$$\vec{a}_s = \vec{v}_{s0}\omega\cos\omega t$$

$$\vec{a}_c = 2\vec{v}_{s0}\sin\omega t \times \vec{\Omega} \qquad (4)$$

Damit stehen die beiden Beschleunigungsvektoren räumlich senkrecht aufeinander und sind in der Zeitfunktion um 90˚ gegeneinander versetzt (räumliche und zeitliche Orthogonalität).

Diese beiden Kriterien können benutzt werden, um die Schwingerbeschleunigung $\vec{a}_s$ von der Coriolisbeschleunigung $\vec{a}_c$ zu trennen. Das Verhältnis der o. g. Beschleunigungsamplituden $a_c$ und $a_s$ beträgt:

$$\frac{a_c}{a_s} = \frac{2\Omega}{\omega} \qquad (5)$$

Für eine Drehrate $\Omega$ = 5˚/h und eine Eigenfrequenz des Schwingers $f_s$ = 10 KHz ergibt sich:

$$\frac{a_c}{a_s} = 7{,}7 \cdot 10^{-10} \tag{6}$$

Für eine Genauigkeit von 5°/h dürfen unerwünschte Kopplungen des ersten Schwingers auf den zweiten Schwinger höchstens $7{,}7 \cdot 10^{-10}$ betragen oder auf diesem Wert konstant sein. Verwendet man ein Massensystem aus zwei linearen Schwingern, die über Federelemente miteinander gekoppelt sind, so ist die Genauigkeit der räumlichen Orthogonalität aufgrund der Fehlausrichtung der Federelemente zwischen Schwing- und Messmode begrenzt. Die erreichbare Genauigkeit (durch Fertigungstoleranzen begrenzt) beträgt $10^{-3}$ bis $10^{-4}$. Die Genauigkeit der zeitlichen Orthogonalität wird durch die Phasengenauigkeit der Elektronik bei z. Bsp. 10 KHz begrenzt, die ebenfalls nur auf höchstens $10^{-3}$ bis $10^{-4}$ einzuhalten ist. Daraus folgt, dass das oben definierte Verhältnis der Beschleunigungen nicht eingehalten werden kann.

Realistisch ergibt sich ein Fehler des gemessenen Beschleunigungsverhältnisses $a_c/a_s$ von

$$\frac{a_c}{a_s} = 10^{-6} \, bis \, 10^{-8} \tag{7}$$

Der räumliche Fehler resultiert in einem sogenannten Quadraturbias Bg, der mit dem zeitlichen Phasenfehler $\Delta_\varphi$ einen Bias B ergibt:

$$B_Q = 6{,}5 \cdot 10^6 \, °/h \text{ bis } 6{,}5 \cdot 10^5 \, °/h$$

$$\Delta_\varphi = 10^{-3} \text{ bis } 10^{-4} \tag{8}$$

$$B = B_Q \cdot \Delta_\varphi = 6.500 \, °/h \text{ bis } 65 \, °/h$$

Somit bewirkt der Quadraturbias eine starke Einschränkung der Messgenauigkeit. Dabei ist anzumerken, dass o. g. Fehlerbetrachtung nur die direkte Kopplung vom Schwing- in den Auslesemode berücksichtigt. Es existieren noch weitere Quadraturbiasanteile, die beispielsweise durch Kopplungen mit anderen Schwingungsmoden entstehen.

Wenn der Corioliskreisel derart ausgestaltet ist, dass die ersten Schwinger durch erste Federelemente mit einem Kreiselrahmen des Corioliskreisels verbunden, und die zweiten Schwinger durch zweite Federelemente jeweils mit einem der ersten Schwinger verbunden sind, so bewirkt die zu messende Beschleunigung eine Änderung der gegenseitigen Ausrichtung der ersten Schwinger zu den zweiten Schwingern, die sich insbesondere in einer Änderung der Ausrichtung der zweiten Federelemente manifestiert. Die Ausrichtungsänderung der zweiten Federelemente erzeugt hierbei einen "künstlichen" Quadraturbias-Anteil, d.h. einen "Fehler" im Quadraturbias-Signal. Somit kann über die Bestimmung des Quadraturbias indirekt auch auf die zu messende Beschleunigung geschlossen werden, die den entsprechenden "künstlichen" Quadraturbias-Anteil bewirkt hat.

Die Ausrichtungen der ersten und zweiten Federelemente verlaufen vorzugsweise senkrecht zueinander. Die Federelemente können eine beliebige Form aufweisen.

Unter "erster Quadraturbias" und "zweiter Quadraturbias" wird vorzugsweise jeweils der gesamte Quadraturbias eines Reonators verstanden. Es ist jedoch auch möglich, im erfindungsgemäßen Beschleunigungsmeßverfahren in jedem Resonator jeweils nur einen Quadraturbiasanteil zu ermitteln, wobei der ermittelte Quadraturbiasanteil zumindest den durch die zu messende Beschleunigung bzw. zu messende Drehung bewirkten Anteil enthalten muss.

Der Corioliskreisel weist vorzugsweise eine Einrichtung zur Ermittlung erster Drehraten- und Quadraturbiassignale, die innerhalb des ersten Resonators auftreten, und zweiter Drehraten- und Quadraturbiassignale, die innerhalb des zweiten Resonators auftreten, auf. Der Corioliskreisel kann ferner eine Einrichtung zur Erzeugung elektrostatischer Felder aufweisen, durch die ein Ausrichtungswinkel der ersten Federelemente bezüglich des Kreiselrahmens änderbar und/oder ein Ausrichtungswinkel der zweiten Federelemente bezüglich der ersten Schwinger änderbar ist. Durch Vorsehen entsprechender Regelkreise kann dann die Ausrichtung/Stärke der elektrostatischen Felder so geregelt werden, dass der erste und der zweite Quadraturbias jeweils möglichst klein wird. Mittels einer Recheneinheit kann aus den ersten und zweiten Drehraten-/Quadraturbiassignalen die Drehrate ermittelt und aus einem Gleichtaktanteil der elektrostatischen Felder, die den ersten und zweiten Quadraturbias kompensieren, auf die zu messende Beschleunigung geschlossen werden.

Der Quadraturbias wird vorzugsweise also am Entstehungsort selbst eliminiert, d. h. mechanische Fehlausrichtungen der beiden Schwinger zueinander sowie durch die zu messende Beschleunigung/Drehung bewirkte Änderungen der gegenseitigen Ausrichtung der beiden Schwinger werden durch eine elektrostatische Kraft, die auf einen oder beide Schwinger wirkt und durch das elektrostatische Feld erzeugt wird, kompensiert. Eine derartige Quadraturbias-Kompensation hat den Vorteil, dass sowohl Drehraten als auch Beschleunigungen mit einer erhöhten Messgenauigkeit ermittelt werden können.

In einer besonders bevorzugten Ausführungsform werden durch die elektrischen Felder die Ausrichtungswinkel der ersten und zweiten Federelemente so geändert, dass eine Orthogonalisierung der Ausrichtungen der ersten und zweiten Federelemente zueinander bewirkt wird. Ist eine derartige Orthogonalisierung erreicht, so ist der dadurch erzeugte Quadraturbias(anteil) kompensiert. Bei weiteren Beiträgen zum Quadraturbias wird der Fehlwinkel zur Orthogonalität so eingestellt, dass der gesamte Quadraturbias verschwindet. Vorzugsweise werden die Ausrichtungswinkel der zweiten Federelemente bezüglich des ersten Schwingers durch das elektrostatische Feld geändert, und die Ausrichtungswinkel der ersten Federelemente bezüglich des Kreiselrahmens des Corioliskreisels nicht geändert. Es ist jedoch auch möglich, durch das elektrostatische Feld lediglich die Ausrichtungswinkel der ersten Federelemente zu ändern, oder die Ausrichtungswinkel sowohl der ersten als auch der zweiten Federelemente zu ändern.

Eine besonders bevorzugte Ausführungsform eines erfindungsgemäßen Corioliskreisels weist:

- einen ("Gesamt"-) Resonator, der als System aus zwei gekoppelten ersten (linearen) Schwingern ("Sub-Resonatoren") realisiert ist, die im Gegentakt erregt werden und die jeweils einen zweiten linearen Ausleseschwinger enthalten,
- eine Einrichtung zur Erzeugung wenigstens eines elektrostatischen Felds, durch das die Ausrichtung der beiden gekoppelten ersten Schwinger zu den zweiten (Auslese-) Schwingern änderbar ist,
- eine Einrichtung zur Ermittlung der Quadraturbiasse der Ausleseschwinger, die durch Fehlausrichtungen der beiden Schwinger zum Erregungsschwinger und weiteren Kopplungsmechanismen verursacht werden,
- einen Regelkreis, der die Stärke des wenigstens einen elektrostatischen Felds mittels wenigstens eines entsprechenden Regelsignals jeweils so regelt, dass die ermittelten Quadraturbiasse möglichst klein werden,
- eine Recheneinheit, die jeweils Differenzen und Summen des wenigstens einen Regelsignals bildet und daraus die Drehrate und die Beschleunigung ermittelt, auf.

Prinzipiell ist es möglich, Beschleunigungen bzw. Drehraten nur auf Basis der ermittelten Quadraturbiasse zu berechnen, d.h. für eine Ermittlung der Quadraturbiasse ist eine Kompensation des ersten und zweiten Quadraturbias nicht zwingend notwendig. Aufgrund von Messgenauigkeitsgründen ist dies jedoch ratsam, da wegen Phasentoleranzen Drehrate und Quadratur miteinander vermischt sind. Die Erfindung beinhaltet beide Alternativen.

Es hat sich als vorteilhaft erwiesen, in den Resonatoren jeweils den zweiten Schwinger am ersten Schwinger "einseitig" zu befestigen bzw. einzuspannen. "Einseitig eingespannt" kann hierbei sowohl wörtlich als auch in einem allgemeinen Sinn verstanden werden. Allgemein bedeutet "einseitig" befestigt bzw. eingespannt, dass die Krafteinleitung von dem ersten Schwinger auf den zweiten Schwinger im Wesentlichen von einer "Seite" des ersten Schwingers aus erfolgt. Wäre der Aufbau des Schwingersystems beispielsweise derart, dass der zweite Schwinger durch den ersten Schwinger eingerahmt wird und mit diesem durch zweite Federelemente verbunden ist, so würde einseitig eingespannt bzw. befestigt folgendes implizieren: der zweite Schwinger wird der Bewegung des ersten Schwingers nachgeführt, indem der erste Schwinger den zweiten Schwinger mittels der zweiten Federelemente abwechselnd "schiebt" oder "zieht".

Ein einseitiges Einspannen des zweiten Schwingers am ersten Schwinger hat den Vorteil, dass bei Ausüben einer elektrostatischen Kraft auf den zweiten Schwinger aufgrund der dadurch resultierenden Ausrichtungs-/Positionsänderung des zweiten Schwingers die zweiten Federelemente leicht verbogen werden können und damit der entsprechende Ausrichtungswinkel der zweiten Federelemente problemlos geändert werden kann. Wäre in diesem Beispiel der zweite Schwinger an zusätzlichen zweiten Federelementen aufgehängt derart, dass bei einer Bewegung des ersten Schwingers der zweite Schwinger durch die zweiten Federelemente gleichzeitig "gezogen" und "geschoben" würde, so läge eine "zweiseitige" Einspannung bzw. Befestigung des zweiten Schwingers an dem ersten Schwinger vor (Krafteinleitung auf den zweiten Schwinger von zwei gegenüberliegenden Seiten des ersten Schwingers aus). In diesem Fall würden die zusätzlichen zweiten Federelemente bei Anlegen eines elektrostatischen Felds entsprechende Gegenkräfte erzeugen, so dass Änderungen der Ausrichtungswinkel der zweiten Federelemente nur schwer erzielbar wären. Eine zweiseitige Einspannung ist jedoch dann akzeptabel, wenn die zusätzlichen zweiten Federelemente so ausgelegt sind, dass der Einfluss dieser Federelemente gering ist und somit auch hier eine problemlose Verbiegung aller Federelemente erfolgen kann, also effektiv eine einseitige Einspannung vorliegt. Je nach Auslegung der Schwingerstruktur kann effektiv bereits eine einseitige Einspannung vorliegen, wenn der "Einfluss" (Krafteinleitung) der zusätzlichen zweiten Federelemente 40% oder weniger beträgt. Dieser Wert stellt jedoch keine Einschränkung der Erfindung dar, es ist auch denkbar dass der Einfluss der zweiten Federelemente mehr als 40% beträgt. Eine einseitige Einspannung kann beispielsweise dadurch realisiert werden, dass alle zweiten Federelemente, die den zweiten Schwinger mit dem ersten Schwinger verbinden, parallel und in einer Ebene zueinander angeordnet sind. Alle Anfangs- und Endpunkte der zweiten Federelemente sind jeweils an den gleichen Seiten des ersten bzw. zweiten Schwingers befestigt. Die Anfangs- und Endpunkte der zweiten Federelemente können dabei vorteilhafterweise jeweils auf einer gemeinsamen Achse liegen, wobei die Achsen die zweiten Federelemente im rechten Winkel schneiden.

Ist der zweite Schwinger einseitig am ersten Schwinger befestigt bzw. eingespannt, so sind die ersten Federelemente vorzugsweise so ausgestaltet, dass diese den ersten Schwinger am Kreiselrahmen zweiseitig einspannen (die Begriffe "einseitig" und "zweiseitig" sind hier analog zu verwenden). Alternativ hierzu ist es jedoch möglich, auch die ersten Federelemente so auszugestalten, dass sie den ersten Schwinger einseitig einspannen. Beispielsweise können sämtliche erste Federelemente, die den ersten Schwinger mit dem Kreiselrahmen des Corioliskreisels verbinden, parallel und in einer Ebene zueinander angeordnet sein, wobei vorzugsweise die Anfangs- und Endpunkte der ersten Federelemente jeweils auf einer gemeinsamen Achse liegen. Genauso ist es möglich, die Federelemente so auszugestalten, dass der erste Schwinger am Kreiselrahmen einseitig eingespannt ist, und der zweite Schwinger durch den ersten Schwinger zweiseitig eingespannt wird. Auch ist es möglich, beide Schwinger zweiseitig einzuspannen. Für die Quadraturbiaskompensation hat es sich als vorteilhaft erwiesen, wenigstens einen der beiden Schwinger einseitig einzuspannen.

Die Erfindung wird im Folgenden unter Bezugnahme auf die Figuren in beispielsweiser Ausführungsform näher erläutert. Es zeigen:

Fig. 1    eine mögliche Ausführungsform eines aus zwei linearen Schwingern bestehenden Massensystems mit entsprechenden Regelkreisen, die der Anregung des ersten Schwingers dienen.

Fig. 2    eine mögliche Ausführungsform eines aus zwei linearen Schwingern bestehenden Massensystems mit entsprechenden Mess- und Regelkreisen für eine Drehrate $\Omega$ und einen Quadraturbias Bg sowie Hilfregelkreisen zur Kompensation des Quadraturbias $B_g$.

Fig. 3    eine Prinzipsksizze eines erfindungsgemäßen, aus vier linearen Schwingern bstehenden Massensystems mit entsprechenden Mess- und Regelkreisen für eine Drehrate $\Omega$ und einen Quadraturbias $B_g$ sowie den Hilfsregelkreisen zur Kompensation des Quadraturbias.

Fig. 4    eine bevorzugte Ausführungsform des in Fig. 3 gezeigten Regelsystems.

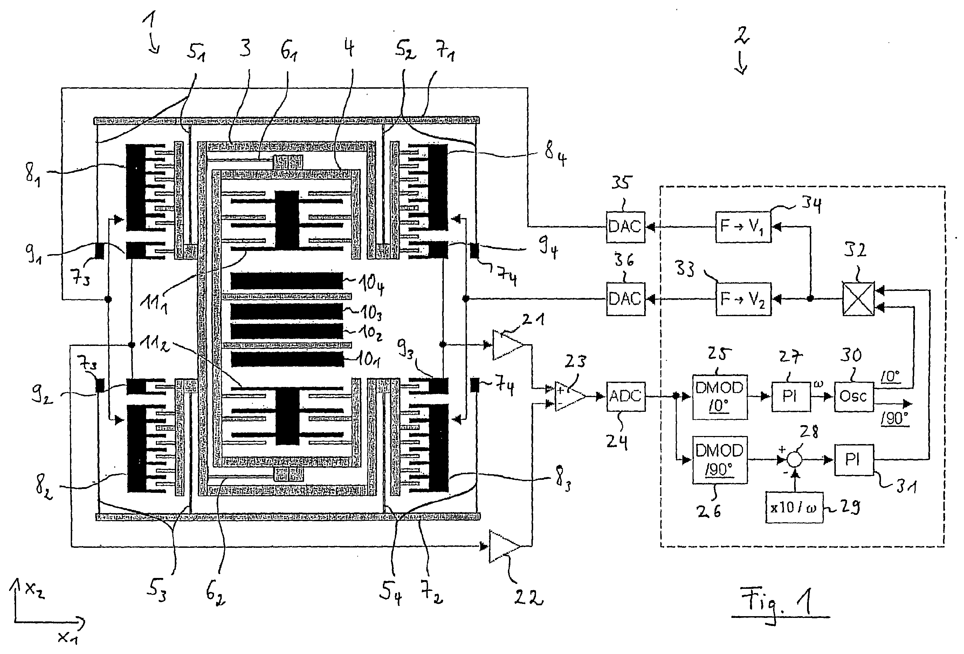

Fig. 1 zeigt den schematischen Aufbau eines linearen Doppelschwingers 1 mit entsprechenden Elektroden, sowie ein Blockschaltbild einer zugehörigen Auswerte-/Anregungselektronik 2. Der lineare Doppelschwinger 1 wird vorzugsweise mittels Ätzprozessen aus einer Siliziumscheibe hergestellt und weist einen ersten linearen Schwinger 3, einen zweiten linearen Schwinger 4, erste Federelemente $5_1$ bis $5_4$, zweite Federelemente $6_1$ und $6_2$ sowie Teile eines Zwischenrahmens $7_1$ und $7_2$ und eines Kreiselrahmens $7_3$ und $7_4$ auf. Der zweite Schwinger 4 ist innerhalb des ersten Schwingers 3 schwingbar gelagert und mit diesem über die zweiten Federelemente $6_1$, $6_2$ verbunden. Der erste Schwinger 3 ist mit dem Kreiselrahmen $7_3$, $7_4$ durch die ersten Federelemente $5_1$ bis $5_4$ und dem Zwischenrahmen $7_1$, $7_2$ verbunden.

Weiterhin sind erste Anregungselektroden $8_1$ bis $8_4$, erste Ausleseelektroden $9_1$ bis $9_4$, zweite Anregungselektroden $10_1$ bis $10_4$ sowie zweite Ausleseelektroden $11_1$ und $11_2$ vorgesehen. Sämtliche Elektroden sind mit dem Kreiselrahmen mechanisch verbunden, aber elektrisch isoliert. Unter "Kreiselrahmen" wird eine mechanische, nicht-schwingende Struktur verstanden, in der die Schwinger "eingebettet" sind, beispielsweise der nicht-schwingende Teil der Siliziumscheibe.

Wird der erste Schwinger 3 mittels der ersten Anregungselektroden $8_1$ bis $8_4$ zu einer Schwingung in X1-Richtung angeregt, so wird diese Bewegung durch die zweiten Federelemente $6_1$, $6_2$ auf den zweiten Schwinger 4 übertragen (abwechselndes "Ziehen" und "Schieben"). Durch die vertikale Ausrichtung der ersten Federelemente $5_1$ bis $5_4$ ist dem ersten Schwinger 3 eine Bewegung in der X2-Richtung verwehrt. Eine vertikale Schwingung kann jedoch aufgrund der horizontalen Ausrichtung der zweiten Federelemente $6_1$, $6_2$ durch den zweiten Schwinger 4 ausgeführt werden. Treten demnach entsprechende Corioliskräfte auf, so wird der zweite Schwinger 4 zu Schwingungen in der X2-Richtung angeregt.

Ein von den ersten Ausleseelektroden $9_1$ bis $9_4$ ausgelesenes, der Amplitude/Frequenz der X1-Bewegung des ersten Schwingers 3 proportionales Auslesesignal wird über entsprechende Verstärkerelemente 21, 22 und 23 einem Analog/Digital-Wandler 24 zugeführt. Ein entsprechend digitalisiertes Ausgangssignal des Analog/Digital-Wandlers 24 wird sowohl durch einen ersten Demodulator 25 und durch einen zweiten Demodulator 26 in entsprechende Ausgangssignale demoduliert, wobei die beiden Demodulatoren um 90˚ versetzt zueinander arbeiten. Das Ausgangssignal des ersten Demodulators 25 wird einem ersten Regler 27 zur Regelung der Frequenz der Anregungsschwingung (Schwingung des Massensystems 1 in X1-Richtung) zugeführt, dessen Ausgangssignal einen Frequenzgenerator 30 so steuert, dass das nach dem Demodulator 25 auftretende Signal auf Null geregelt wird. Analog hierzu wird das Ausgangssignal des zweiten Demodulators 26 auf einen konstanten Wert geregelt, der von der Elektronikkomponente 29 vorgegeben wird. Ein zweiter Regler 31 sorgt für die Regelung der Amplitude der Anregungsschwingung. Die Ausgangssignale des Frequenzgenerators 30 und des Amplitudenreglers 31 werden durch einen Multiplizierer 32 miteinander multipliziert. Ein Ausgangssignal des Multiplizierers 32, das der auf die ersten Anregungselektroden $8_1$ bis $8_4$ zu gebenden Kraft proportional ist, beaufschlagt sowohl einen ersten Kraft-Spannungswandler 33 als auch einen zweiten Kraft-Spannungswandler 34, die aus dem digitalen Kraftsignal digitale Spannungssignale erzeugen. Die digitalen Ausgangssignale der Kraft-Spannungswandler 33, 34 werden über einen ersten und einen zweiten Digital/AnalogWandler 35, 36 in entsprechende analoge Spannungssignale umgesetzt, die dann auf die ersten Anregungselektroden $8_1$ bis $8_4$ gegeben werden. Durch den ersten Regler 27 und den zweiten Regler 31 werden die Frequenz der Eigenfrequenz des ersten Schwingers 3 nachgeführt und die Amplitude der Anregungsschwingung auf einen bestimmten, vorgebbaren Wert eingestellt.

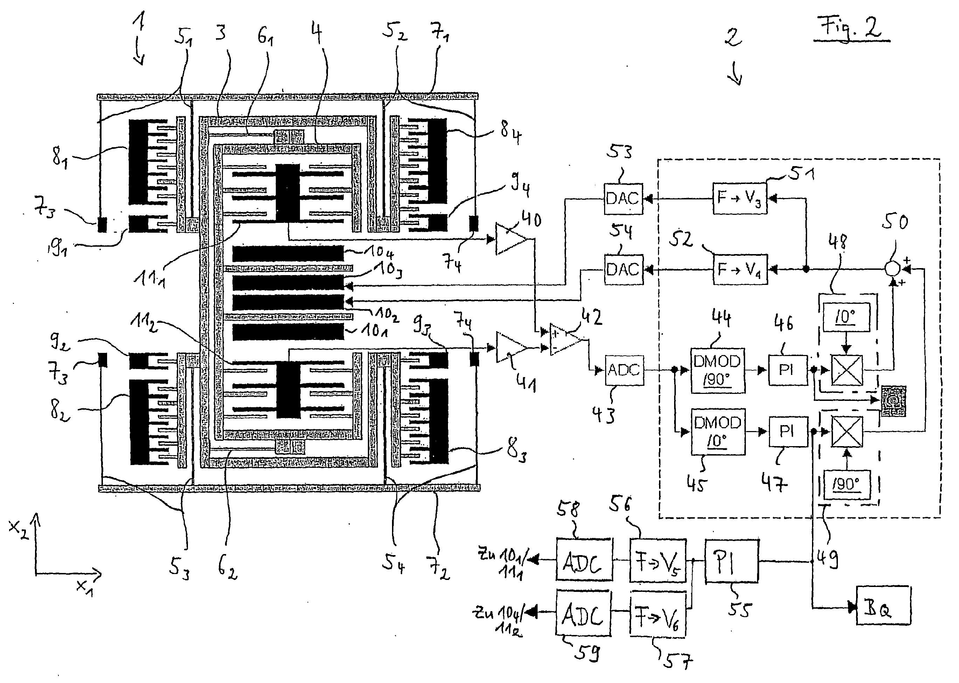

Treten Corioliskräfte auf, so wird die daraus resultierende Bewegung des zweiten Schwingers 4 in X2-Richtung (Ausleseschwingung) durch die zweiten Ausleseelektroden $11_1$, $11_2$ erfasst und ein der Bewegung der Ausleseschwingung proportionales Auslesesignal über entsprechende Verstärkerelemente 40, 41, und 42 einem Analog/Digital-Umwandler 43 zugeführt (siehe Fig. 2). Ein digitales Ausgangssignal des Analog/Digital-Umwandlers 43 wird von einem dritten Demodulator 44 in Phase mit dem Direktbiassignal demoduliert, und durch einen vierten Demodulator 45 um 90˚ versetzt demoduliert. Ein entsprechendes Ausgangssignal des ersten Demodulators 44 beaufschlagt einen dritten Regler 46, dessen Ausgangssignal ein Kompensationssignal ist und der zu messenden Drehrate $\Omega$ entspricht. Ein Ausgangssignal des vierten Demodulators 45 beaufschlagt einen vierten Regler 47, dessen Ausgangssignal ein Kompensationssignal ist und dem zu kompensierenden Quadraturbias proportional ist. Das Ausgangssignal des dritten Reglers wird mittels eines ersten Modulators 48 moduliert, analog hierzu wird das Ausgangssignal des vierten Reglers 47 durch einen zweiten Modulator 49 moduliert, sodass amplitudengeregelte Signale entstehen, deren Frequenz der Eigenfrequenz der Schwingung in X1-Richtung ($\sin \cong 0˚$, $\cos \cong 90˚$) entsprechen. Entsprechende Ausgangssignale der Modulatoren 48, 49 werden in einer Addierstufe 50 addiert, deren Ausgangssignal sowohl einem dritten Kraft-Spannungswandler 51 als auch einem vierten Kraft-Spannungswandler 52 zugeführt wird. Die entsprechenden Ausgangssignale der Kraft-Spannungswandler 51, 52 werden Digital/Analog-Umwandlern 53, 54 zugeführt, wobei deren analoge Ausgangssignale die zweiten Anregungselektroden $10_2$ bis $10_3$ beaufschlagen und die Schwingungsamplituden des zweiten Schwingers 4 rückstellen.

Das durch die zweiten Anregungselektroden $10_1$ und $10_4$ erzeugte elektrostatische Feld (bzw. die beiden durch die Elektrodenpaare $10_1$, $10_3$ und $10_2$, $10_4$ erzeugten elektrostatischen Felder) bewirkt eine Ausrichtungs-/Positionsänderung des zweiten Schwingers 4 in der X2-Richtung und damit eine Änderung der Ausrichtungen der zweiten Federelemente $6_1$ bis $6_2$. Der vierte Regler 47 regelt das die zweiten Anregungselektroden $10_1$ und $10_4$ beaufschlagende Signal derart, dass der Quadraturbias, der im Kompensationssignal des vierten Reglers 47 enthalten ist, möglichst klein wird bzw. verschwindet. Dazu wird ein fünfter Regler 55, ein fünfter und sechster Kraft-Spannungswandler 56, 57 und zwei Analog/Digital-Umwandler 58, 59 eingesetzt.

Das Ausgangssignal des vierten Reglers 47, das ein Maß für den Quadraturbias ist, wird dem fünften Regler 55 zugeführt, der das durch die beiden Anregungselektroden $10_1$ und $10_4$ erzeugte elektrostatische Feld so regelt, dass der Quadraturbias $B_g$ verschwindet. Dazu wird ein Ausgangssignal des fünften Reglers 55 jeweils dem fünften und sechsten Kraft-Spannungswandler 56, 57 zugeführt, die aus dem digitalen Kraft-Ausgangssignal des fünften Reglers digitale Spannungssignale erzeugen. Diese werden anschließend in den Analog/Digital-Umwandlern 58, 59 in analoge Spannungssignale umgewandelt. Das analoge Ausgangssignal des Analog/Digital-Umwandlers 58 wird der zweiten Anregungselektrode $10_1$ oder alternativ $11_1$ zugeführt. Das analoge Ausgangssignal des Analog/Digital-Umwandlers 59 wird der zweiten Anregungselektrode $10_4$ oder alternativ $11_2$ zugeführt.

Da die Einspannung des zweiten Schwingers 4 lediglich durch die zweiten Federelemente $6_1$ bis $6_2$ bewirkt wird (einseitige Einspannung), kann die Ausrichtung dieser Federelemente durch das elektrostatische Feld problemlos geändert werden. Weiterhin ist es möglich, zusätzliche zweite Federelemente vorzusehen, die eine zweiseitige Einspannung des zweiten Schwingers 4 bewirken, solange durch entsprechende Auslegung dieser zusätzlichen Federelemente sichergestellt ist, dass effektiv eine einseitige Einspannung erzielt wird. Um denselben Effekt auch für die Federelemente $5_1$, $5_2$ bzw. die Federelemente $5_3$, $5_4$ zu ermöglichen, können das dritte und vierte Federelement $5_3$, $5_4$ bzw. das erste und zweite Federelement $5_1$, $5_2$ weggelassen werden und damit (zusammen mit einer hier nicht gezeigten, entsprechend geänderten Elektrodenkonfiguration) eine einseitige Einspannung des ersten Schwingers 3 bewirkt werden. In einem derartigen Fall könnte der zweite Schwinger 4 auch mit weiteren Federelementen am ersten Schwinger befestigt werden, um eine zweiseitige Einspannung zu erzielen.

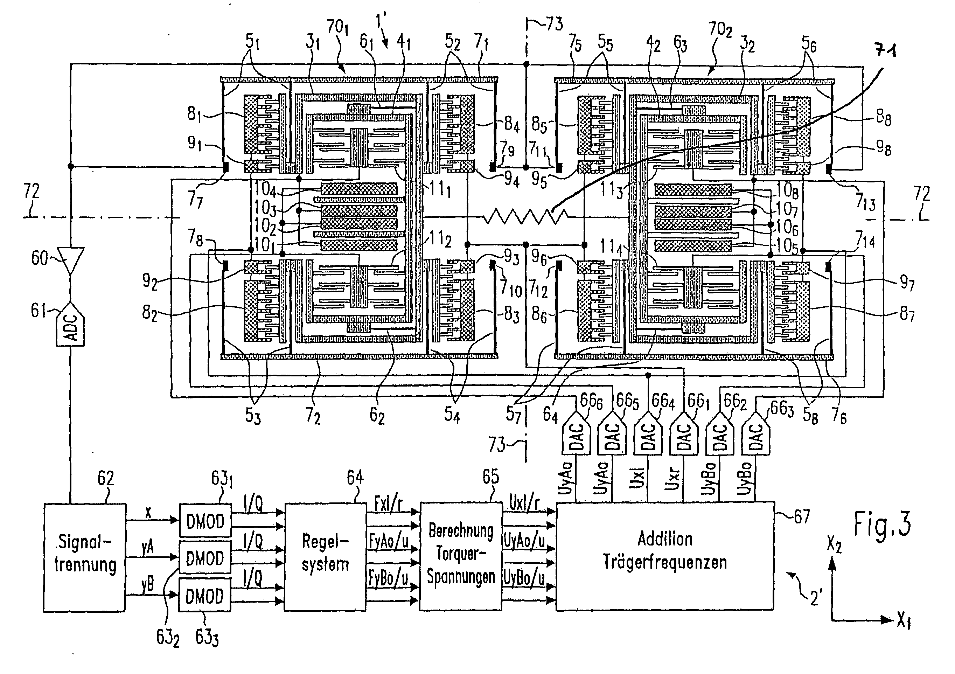

In der folgenden Beschreibung soll unter Bezugnahme auf Fig. 3 eine bevorzugte Ausführungsform des erfindungsgemäßen Corioliskreisels sowie dessen Funktionsweise näher beschrieben werden.

Fig. 3 zeigt den schematischen Aufbau eines gekoppelten Systems 1' aus einem ersten Resonator $70_1$ und einem zweiten Resonator $70_2$. Der erste Resonator $70_1$ ist mit dem zweiten Resonator $70_2$ über ein mechanischen Kopplungselement 71, eine Feder, gekoppelt. Der erste und der zweite Resonator $70_1$, $70_2$ sind in einem gemeinsamen Substrat ausgebildet und können entlang einer gemeinsamen Schwingungsachse 72 gegentaktig zueinander in Schwingung versetzt werden. Der erste und der zweite Resonator $70_1$, $70_2$ sind identisch und werden über eine Symmetrieachse 73 aufeinander abgebildet. Der Aufbau des ersten und des zweiten Resonators $70_1$, $70_2$ wurde bereits im Zusammenhang mit Fig. 1 und 2 erläutert und wird deshalb nicht nochmals erklärt; identische bzw. einander entsprechende Bauteile bzw. Bauteilgruppen sind mit den gleichen Bezugsziffern gekennzeichnet, wobei identische Bauteile, die unterschiedlichen Resonatoren angehören, mit unterschiedlichen Indices gekennzeichnet sind.

Ein wesentlicher Unterschied der in Fig. 3 gezeigten Doppelschwingern zu den in den Fig. 1 und 2 gezeigten Doppelschwingern ist, dass einige der Einzelelektroden konstruktiv zu einer Gesamtelektrode zusammengefasst werden. So bilden beispielsweise die mit den Bezugsziffern $8_1$, $8_2$, $9_1$ und $9_2$ gekennzeichneten Einzelelektroden in Fig. 3 eine gemeinsame Elektrode. Weiterhin bilden die mit den Bezugsziffern $8_3$, $8_4$, $9_3$ und $9_4$ gekennzeichneten Einzelelektroden eine gemeinsame Elektrode, und die mit den Bezugsziffern $10_4$, $10_2$, $11_2$ sowie den Bezugsziffern $11_1$, $10_3$ und $10_1$ jeweils eine Gesamtelektrode. Das Gleiche gilt analog für das andere Doppelschwingersystem.

Bei Betrieb des erfindungsgemäßen gekoppelten Systems 1' schwingen die beiden Resonatoren $70_1$, $70_2$ entlang der gemeinsamen Schwingungsachse 72 im Gegentakt. Damit ist das gekoppelte System 1' unanfällig gegenüber externen Störungen bzw. gegenüber Störungen, die durch das gekoppelte System 1' selbst in das Substrat, in dem die Resonatoren $70_1$ und $70_2$ gelagert sind, abgegeben werden.

Wenn das gekoppelte System 1' gedreht wird, so werden die zweiten Schwinger $4_1$ und $4_2$ in zueinander entgegengesetzte Richtungen ausgelenkt (in X2-Richtung und entgegengesetzt zur X2-Richtung). Tritt eine Beschleunigung des gekoppelten Systems 1' auf, so werden die zweiten Schwinger $4_1$, $4_2$ jeweils in die gleiche Richtung, nämlich in Richtung der Beschleunigung, ausgelenkt, insofern diese in oder entgegengesetzt der X2-Richtung wirkt. Somit lassen sich gleichzeitig oder wahlweise Beschleunigungen und Drehungen messen. Während den Messverfahren kann gleichzeitig eine Quadraturbias-Kompensation in den Resonatoren $70_1$, $70_2$ erfolgen. Dies ist jedoch nicht zwingend erforderlich.

Prinzipiell ist es möglich, das gekoppelte System 1' auf Basis der in Fig. 1 und 2 beschriebenen Auswerte-/Anregungselektronik 2 zu betreiben. In der in Fig. 3 gezeigten Ausführungsform wird jedoch stattdessen ein alternatives Verfahren (Trägerfrequenzverfahren) eingesetzt. Dieses Betriebsverfahren soll im Folgenden beschrieben werden.

Die mit Bezugsziffer 2' gekennzeichnete Auswerte-/Anregungselektronik 2 weist drei Regelkreise auf: Einen ersten Regelkreis zur Anregung bzw. Regelung einer Gegentaktschwingung der ersten Schwinger $3_1$ und $3_2$ entlang der gemeinsamen Schwingungsachse 72, einen zweiten Regelkreis zur Rückstellung und Kompensation der Schwingungen des zweiten Schwingers $4_1$ entlang der X2-Richtung, und einen Regelkreis zur Rückstellung und Kompensation der Schwingungen des zweiten Schwingers $4_2$ entlang der X2-Richtung. Die beschriebenen drei Regelkreise weisen einen Verstärker 60, einen Analog/Digital-Umwandler 61, ein Signaltrennungsmodul 62, ein erstes bis drittes Demodulationsmodul $63_1$ bis $63_3$, ein Regelmodul 64, ein Elektrodenspannungs-Berechnungsmodul 65, ein Trägerfrequenz-Additionsmodul 67, sowie einen ersten bis sechsten Digital/Analog-Umwandler $66_1$ bis $66_6$ auf.

Die Beaufschlagung der Elektroden $8_1$ bis $8_8$, $9_1$ bis $9_8$, $10_1$ bis $10_8$ sowie $11_1$ bis $11_4$ mit Trägerfrequenzen zur Abgriffserregung der Gegentaktschwingung bzw. der Schwingungen der zweiten Schwinger $4_1$, $4_2$ kann hierbei auf mehrerlei Art und Weise erfolgen: a) Unter Verwendung von drei unterschiedlichen Frequenzen, wobei jedem Regelkreis eine Frequenz zugeordnet ist, b) unter Verwendung von Rechtecksignalen im Zeitmultiplex-Verfahren, oder c) unter Verwendung einer Random-Phasen-Verwürfelung (stochastisches Modulationsverfahren). Die Beaufschlagung der Elektroden $8_1$ bis $8_8$, $9_1$ bis $9_8$, $10_1$ bis $10_8$ sowie $11_1$ bis $11_4$ erfolgt über die zusammengehörigen Signale UyAo, UyAu (für den zweiten Schwinger $4_1$) und Uxl, Uxr (für die Gegentaktresonanz der ersten Schwinger $3_1$ zu $3_2$), sowie UyBu und UyBo (für den zweiten Schwinger $4_2$), die in dem Trägerfrequenz-Additionsmodul 67 erzeugt und in Gegentakt mit o.g. Frequenzsignalen erregt werden. Der Abgriff der Schwingungen der ersten und zweiten Schwinger $3_1$, $3_2$, $4_1$ und $4_2$ erfolgt über die mit Bezugsziffern $7_7$, $7_9$, $7_{11}$ und $7_{13}$ gekennzeichneten Teile des Kreiselrahmens, die hier neben ihrer Funktion als Aufhängepunkte des Massensystems zusätzlich als Abgriffselektroden dienen. Dazu sind die beiden Resonatoren $70_1$, $70_2$ vorzugsweise mit allen Rahmen, Federn und Verbindungen vorteilhafterweise elektrisch leitend ausgestaltet. Das durch die Kreiselrahrnen-Teile $7_7$, $7_9$, $7_{11}$ und $7_{13}$ abgegriffene, dem Verstärker 60 zugeführte Signal enthält Information über alle drei Schwingungsmoden und wird durch den Analog/Digital-Umwandler 61 in ein digitales Signal umgewandelt, das dem Signaltrennungsmodul 62 zugeführt wird. In dem Signaltrennungsmodul 62 wird das zusammengesetzte Signal in drei unterschiedliche Signale getrennt: x (enthält Information über die Gegentaktschwingung), yA (enthält Information über die Auslenkung des zweiten Schwingers $4_1$), sowie yB (enthält Information über die Auslenkung des zweiten Schwingers $4_2$). Die Signaltrennung gestaltet sich je nach Typ des verwendeten Trägerfrequenzverfahrens (siehe oben a) bis c)) unterschiedlich, und erfolgt durch Demodulation mit den entsprechenden Signalen des verwendeten Trägerfrequenzverfahrens. Die Signale x, yA, sowie yB werden den Demodulationsmodulen $63_1$ bis

$63_3$ zugeführt, die diese mit einer Arbeitsfrequenz der Gegentaktschwingung für 0˚ und 90˚ demodulieren. Das Regelmodul 64 sowie das Elektrodenspannungs-Berechnungsmodul 65 zur Regelung/Berechnung der Signale Fxl/r bzw. Uxl/r sind vorzugsweise analog zu dem in Fig. 1 gezeigten Elekronikmodul 2 ausgestaltet. Das Regelmodul 64 sowie das Elektrodenspannungs-Berechnungsmodul 65 zur Regelung/Berechnung der Signale FyAo/u, UyAo/u, sowie FyBo/u. UyBo/u sind vorzugsweise analog zu dem in Fig. 2 gezeigten Elekronikmodul 2 ausgestaltet.

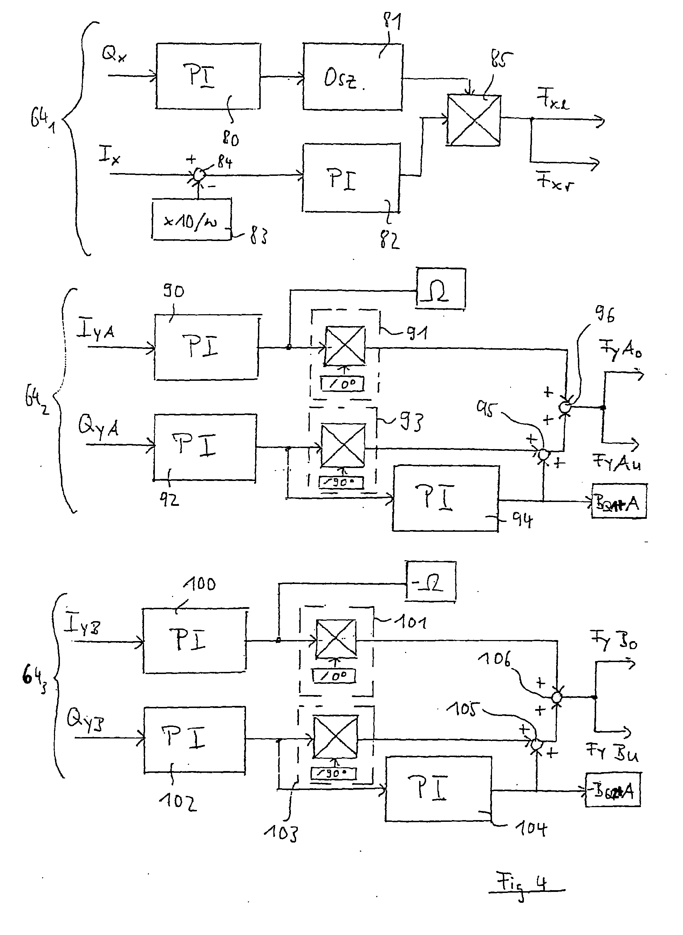

Fig. 4 zeigt eine bevorzugte Ausführungsform des mit Bezugsziffer 64 gekennzeichneten Regelsystems aus Fig. 3. Das Regelsystem 64 weist einen ersten bis dritten Teil $64_1$ bis $64_3$ auf. Der erste Teil $64_1$ weist einen ersten Regler 80, einen Frequenzgenerator 81, einen zweiten Regler 82, eine Elektronikkomponente 83, eine Addierstufe 84, und einen Multiplizierer 85 auf. Die Funktionsweise des ersten Teils entspricht im Wesentlichen der Funktionsweise des in Fig. 1 gezeigten Elektronikmoduls 2 und wird deshalb hier nicht nochmals erläutert. Der zweite Teil $64_2$ weist einen ersten Regler 90, einen ersten Modulator 91, einen zweiten Regler 92, einen zweiten Modulator 93 und einen dritten Regler 94 auf. Ferner sind eine erste und eine zweite Addierstufe 95, 96 vorgesehen. Am Ausgang des ersten Reglers 90 kann ein Drehratensignal $\Omega$, und am Ausgang des dritten Reglers 94 kann ein zusammengesetztes Signal aus der Kompensation des Quadraturbias $B_{Q1}$ und einer Beschleunigung A ermittelt werden. Der dritte Teil $64_3$ des Regelsystems 64 weist einen ersten Regler 100, einen ersten Modulator 101, einen zweiten Regler 102. einen zweiten Modulator 103 und einen dritten Regler 104 auf. Weiterhin sind eine erste und eine zweite Addierstufe 105, 106 vorgesehen. Am Ausgang des ersten Reglers 100 kann ein Drehratensignal $\Omega$ mit negativem Vorzeichen abgegriffen werden, und am Ausgang des dritten Reglers 104 ein zusammengesetzten Signal aus der Kompensation des Quadraturbias $B_{Q2}$ mit negativem Vorzeichen und einem Beschleunigungssignal A. Die Funktionsweise des zweiten und dritten Teils $64_2$ und $64_3$ entspricht der des in Fig. 2 gezeigten Elektronikmoduls 2 und wird deshalb hier nicht nochmals erläutert.

Nur die Signale für die Rückstellung der Drehrate und der Quadratur nach der Multiplikation mit der Arbeitsfrequenz werden zusammen mit den DC-Spannungen für den Quadratur-Hilfsregler auf ein zusammengefasstes Elektrodenpaar gegeben. Deshalb werden beide Signale addiert, so dass die Berechnung der Elekrodenspannungen die Rückstellsignale bei der Schwingfrequenz und das DC-Signal für die Quadraturregelung enthält. Die so berechneten Elektrodenspannungen Uxl/r, UyAo/u und UyBo/u werden dann zu den Trägerfrequenz-Signalen addiert und gemeinsam über die Analog/Digital-Umwandler $66_1$ bis $66_6$ auf die Elektroden gegeben.

Die oben beschriebenen Trägerfrequenzverfahren mit Gegentakterregung haben den Vorteil, dass an dem Verstärker 60 nur dann ein Signal anliegt, wenn die linearen Schwinger $3_1$, $3_2$ sowie $4_1$ und $4_2$ ausgelenkt sind. Die zur Erregung dienenden Frequenzsignale können diskrete Frequenzen oder rechteckige Signale sein. Wegen der leichteren Erzeugung und Verarbeitung werden Rechteckerregungen bevorzugt.

Im Folgenden sollen noch einige Betrachtungen zur Messgenauigkeit des erfindungsgemäßen Beschleunigungs-Messverfahrens gegeben werden.

Die Drehrate bewirkt eine Gegentakt-Auslenkung der Schwinger $4_1$ und $4_2$ bei der Arbeitsfrequenz des Corioliskreisels; dagegen bewirkt die Beschleunigung eine Gleichtakt-Auslenkung der Schwinger $4_1$ und $4_2$, wobei die Beschleunigung im Frequenzgebiet von 0 Hz bis ca. 500 Hz mit einer Messgenauigkeit von 50 mg bis 50 $\mu$g zu messen ist.

Die zu messende Auslenkung im Gleichtakt ergibt sich zu

$$\alpha = \frac{a}{\ell \cdot \omega^2}$$

$\alpha$     Auslenkungswinkel
a     Beschleunigung
$\ell$     Länge der Feder
$\omega$     Eigenfrequenz der Schwinger $4_1$ bis $4_2$.

Für typische Eigenfrquenzen $\omega = 2 * \pi f = 6000$ rad/s bis 60000 rad/s und Federlängen $\ell = 1$ mm von Corioliskreiseln ergibt sich für eine Messgenauigkeit von z. B. 5 mg:

$$\alpha = 1.4 * 10^{-6} \text{ bis } 1.4 * 10^{-8} \text{ rad bzw. } x_2 = x_\ell = 1.4 \text{ nm bis } 14 \text{ pm.}$$

Solche geringen Auslenkungen lassen sich im Frequenzgebiet von 0 bis 500 Hz-Bereich schwer messen. Zumindest erfordert es einen elektronischen Zusatzaufwand für den erfindungsgemäßen Multisensor, weil die Elektronik sowohl im Arbeitsbereich der Kreiselfunktion (Drehratenmessung) von 1 bis 10 KHz als auch im Arbeitsbereich zur Messung der Beschleunigung von 0 bis 500 Hz sehr genau messen muss.

Dieser Nachteil lässt sich erfindungsgemäß dadurch vermeiden, dass man die oben beschrieben Quadraturregelung für ein Massensystem aus zwei linearen Schwingern (Fig 1 und 2) auf das Massesystem aus vier linearen Schwingern (Fig. 3) anwendet: Die Beschleunigung verstimmt den Orthogonalitätsfehler, womit ein deutlich zu sehendes Gleichtakt-Quadratursignal bei der Arbeitsfrequenz in die Schwinger $4_1$ und $4_2$

$$\Omega_Q = \frac{a_Q}{a_S} \cdot \frac{\omega}{2} = \alpha \frac{\omega}{2}$$

Hierbei ist $\Omega_Q$ die Quadraturdrehrate, $a_Q$ die Quadraturbeschleunigung und $a_s$ die Schwingerbeschleunigung.
Für eine Messgenauigkeit von z. B. 5 mg ($\alpha = 1.4.10^{-6}$ rad) ergibt sich

$$\Omega_Q = 0,0042 \frac{rad}{s} = 0,25°/s \approx 866°/h$$

bei einer Eigenfrequenz von 1kHz

$$\Omega_Q = 4,2 \cdot 10^{-5} \frac{rad}{s} / 0,0025°/s = 8,7°/h$$

bei einer Eigenfrequenz von 10kHz
Für einen Drehratensensor von 5˚/h lässt sich mit Sicherheit mit gleicher Elektronik die Quadraturdrehrate von 866˚/h nachweisen, dagegen ist bei der Eigenfrequenz von 10 KHz mit der Quadraturdrehrate von 8.7 ˚/h die Nachweisgrenze des Drehratensensors von 5˚/h nahezu ausgeschöpft. Ob diese Messung auch langzeitstabil ist, hängt von der Langzeitstabilität der Quadraturdrehrate ab. Die eigentliche Quadraturdrehrate ist ein Gegentaktsignal. Deshalb hängt die Stabilität der Beschleunigungsmessung von der Differenz der Quadraturdrehraten von Schwinger $4_1$ zu Schwinger $4_2$ und deren Stabilität ab. Da beide Schwinger eng beieinander liegen und in einem Prozessschritt gefertigt weren, wird man voraussichtlich einen Bereich mit niedriger Genauigkeit von 50 mg bis 50 μg abdecken können.

**Patentansprüche**

1. Corioliskreisel (1'), mit einem ersten und einem zweiten Resonator ($70_1$, $70_2$), die jeweils als gekoppeltes System aus einem ersten und einem zweiten linearen Schwinger ($3_1$, $3_2$, $4_1$, $4_2$) ausgestaltet sind, wobei der erste Resonator ($70_1$) mit dem zweiten Resonator ($70_2$) mechanisch beziehungsweise elektrostatisch so verbunden beziehungsweise gekoppelt ist, dass beide Resonatoren entlang einer gemeinsamen Schwingungsachse (72) gegentaktig zueinander in Schwingung versetzbar sind, wobei die ersten Schwinger ($3_1$, $3_2$) jeweils durch erste Federelemente ($5_1$ - $5_8$) mit einem Kreiselrahmen ($7_1$ - $7_{14}$) des Corioliskreisels verbunden, und die zweiten Schwinger ($4_1$, $4_2$) durch zweite Federelemente ($6_1$ - $6_4$) jeweils mit einem der ersten Schwinger ($3_1$, $3_2$) verbunden sind, und der Corioliskreisel ferner aufweist:

   - eine Einrichtung zur Erzeugung elektrostatischer Felder, durch die ein Ausrichtungswinkel der ersten Federelemente ($5_1$ - $5_8$) bezüglich des Kreiselrahmens änderbar und/oder ein Ausrichtungswinkel der zweiten Federerelemente ($6_1$ - $6_4$) bezüglich der ersten Schwinger ($3_1$, $3_2$) änderbar ist,
   - eine Einrichtung ($10_1$ - $10_8$, $11_1$ - $11_4$)), mit der erste Signale für Drehrate und Quadraturbias, die innerhalb des ersten Resonators ($70_1$) auftreten, und zweite Signale für Drahrate und Quadraturbias, die innerhalb des zweiten Resonators ($70_2$) auftreten, ermittelbar sind,
   - Regelkreise (60 - 67), durch die die Ausrichtungen oder Stärken der elektrostatischen Felder so geregelt werden, dass der erste und der zweite Quadraturbias jeweils möglichst klein werden, und
   - eine Recheneinheit, die aus den ersten und zweiten Signalen die Drehrate ermittelt und aus einem Gleichtaktanteil der elektrostatischen Felder, die den ersten und zweiten Quadraturbias kompensieren, die zu messende Beschleunigung ermittelt.

2. Corioliskreisel (1') nach Anspruch 1, **dadurch gekennzeichnet, dass** die Ausgestaltungen des ersten und des

zweiten Resonators ($70_1$, $70_2$) identisch sind, wobei die Resonatoren ($70_1$, $70_2$) achsensymmetrisch zueinander angeordnet sind bezüglich einer Symmetrieachse (73), die senkrecht auf der gemeinsamen Schwingungsachse (72) steht.

3. Verfahren zur wahlweisen oder gleichzeitigen Messung von Drehraten und Beschleunigungen unter Verwendung eines Drehraten-Corioliskreisels (1'), der einen ersten und einen zweiten Resonator ($70_1$, $70_2$) aufweist, die jeweils als gekoppeltes System aus einem ersten und einem zweiten linearen Schwinger ($3_1$, $3_2$, $4_1$, $4_2$) ausgestaltet sind, wobei die Drehraten und Beschleunigungen durch Abgriff und Auswertung der Auslenkungen der zweiten Schwinger ($4_1$, $4_2$) bestimmt werden, mit den folgenden Schritten:

- Versetzen der beiden Resonatoren ($70_1$, $70_2$) in zueinander gegentaktige Schwingungen entlang einer gemeinsamen Schwingungsachse (72),
- Vergleichen der Auslenkungen der zweiten Schwinger ($4_1$, $4_2$) untereinander, um einen Gegentakt-Auslenkungsanteil, der ein Maß für die zu messende Drehrate ist, und/oder einen gemeinsamen Gleichtakt-Auslenkungsanteil, der ein Maß für die zu messenden Beschleunigung ist, zu ermitteln,
- Berechnen der zu messenden Drehrate beziehungsweise Beschleunigung aus dem Gegentakt-Auslenkungsanteil beziehungsweise Gleichtakt-Auslenkungsanteil,
- Ermitteln des gemeinsamen Gleichtakt-Auslenkungsanteils wie folgt :

- Bestimmen eines ersten Quadraturbias, der innerhalb des ersten Resonators ($70_1$) auftritt,
- Bestimmen eines zweiten Quadraturbias, der innerhalb des zweiten Resonators ($70_2$) auftritt,
- Verrechnen des ersten Quadraturbias mit dem zweiten Quadraturbias, um einen gemeinsamen Quadraturbiasanteil zu bestimmen, der der zu messenden Beschleunigung proportional ist und den gemeinsamen Gleichtakt-Auslenkungsanteil darstellt.

4. Verfahren nach Anspruch 3,
**dadurch gekennzeichnet, dass** elektrostatische Felder zur Änderung der gegenseitigen Ausrichtung der ersten und zweiten Schwinger ($3_1$, $3_2$, $4_1$, $4_2$) erzeugt werden, wobei die Ausrichtung <u>oder</u> Stärke der elektrostatischen Felder so geregelt wird, dass der erste und der zweite Quadraturbias jeweils möglichst klein wird.

**Claims**

1. A Coriolis gyro (1'), having a first and a second resonator ($70_1$, $70_2$), which are each in the form of a coupled system comprising a first and a second linear oscillator ($3_1$, $3_2$, $4_1$, $4_2$), wherein the first resonator ($70_1$) being mechanically/ electrostatically connected/coupled to the second resonator ($70_2$) such that the two resonators can be caused to oscillate in antiphase with one another along a common oscillation axis (72), wherein the first oscillators ($3_1$, $3_2$) are each connected by means of first spring elements ($5_1$ - 58) to a gyro frame ($7_1$ - $7_{14}$) of the Coriolis gyro, and the second oscillators ($4_1$, $4_2$) are each connected by second spring elements ($6_1$ - $6_4$) to one of the first oscillators ($3_1$, $3_2$), and the Coriolis gyro furthermore has:

- a device for production of electrostatic fields, by means of which a alignment angle of the first spring elements ($5_1$ - $5_8$) with respect to the gyro frame can be varied, and/or a alignment angle of the second spring elements ($6_1$ - $6_4$) with respect to the first oscillators ($3_1$, $3_2$) can be varied,
- a device ($10_1$ - $10_8$, $11_1$ - $11_4$) by means of which it is possible to determine first signals for the rotation rate and quadrature bias, which occur within the first resonator ($70_1$), and second signals for the rotation rate and quadrature bias, which occur in the second resonator ($70_2$),
- control loops (60 - 67) by means of which the alignment or strength of the electrostatic fields is regulated such that the first and the second quadrature bias each become as small as possible, and
- a computation unit, which uses the first and second signals to determine the rotation rate, and uses an in-phase component of the electrostatic fields which compensate for the first and second quadrature biases to determine the acceleration to be measured.

2. The Coriolis gyro (1') as claimed in claim 1, **characterized in that** the configurations of the first and of the second resonator ($70_1$, $70_2$) are identical, wherein the resonators ($70_1$, $70_2$) being arranged axially symmetrically with respect to one another with respect to an axis of symmetry (73) which is at right angles to the common oscillation axis (72).

3. A method for selective or simultaneous measurement of rotation rates and accelerations using a rotation rate Coriolis gyro (1') which has a first and a second resonator ($70_1$, $70_2$) which are each in the form of a coupled system comprising a first and a second linear oscillator ($3_1$, $3_2$, $4_1$, $4_2$), wherein the rotation rates and accelerations being determined by tapping and evaluation of the deflections of the second oscillators ($4_1$, $4_2$), having the following steps:

- the two resonators ($70_1$, $70_2$) are caused to carry out oscillations in antiphase with one another along a common oscillation axis (72),
- the deflections of the second oscillators ($4_1$, $4_2$) are compared with one another in order to determine an antiphase deflection component which is a measure of the rotation rate to be measured and/or in order to determine a common in-phase deflection component, which is a measure of the acceleration to be measured,
- calculation of the rotation rate/acceleration to be measured from the in-phase deflection component/antiphase deflection component,
- determination of the common in-phase deflection component is determined as follows:

- a first quadrature bias is determined which occurs within the first resonator ($70_1$),
- a second quadrature bias is determined which occurs within the second resonator ($70_2$),
- the first quadrature bias is offset against the second quadrature bias in order to determine a common quadrature bias component which is proportional to the acceleration to be measured and represents the common in-phase deflection component.

4. The method as claimed in claim 3,
**characterized in that** electrostatic fields are produced in order to vary the mutual alignment of the first and second oscillators ($3_1$, $3_2$, $4_1$, $4_2$), wherein the alignment or strength of the electrostatic fields being regulated such that the first and the second quadrature bias each become as small as possible.

**Revendications**

1. Gyroscope de Coriolis (1') avec un premier et un second résonateur ($70_1$, $70_2$) qui sont composés chacun, comme système couplé, d'un premier et d'un second oscillateur linéaire ($3_1$, $3_2$, $4_1$, $4_2$), le premier résonateur ($70_1$) étant relié ou couplé par voie mécanique ou électrostatique au second résonateur ($70_2$) de telle sorte que les deux résonateurs puissent osciller symétriquement le long d'un axe d'oscillation commun (72), les premiers oscillateurs ($3_1$, $3_2$) étant reliés par des premiers éléments à ressort ($5_1$-$5_8$) à des châssis ($7_1$-$7_{14}$) du gyroscope de Coriolis tandis que les seconds oscillateurs ($4_1$, $4_2$) sont reliés par des seconds éléments à ressort ($6_1$-$6_4$) à l'un des premiers oscillateurs ($3_1$, $3_2$), et le gyroscope de Coriolis comportant par ailleurs :

- un dispositif pour produire des champs électrostatiques grâce auxquels un angle d'orientation des premiers éléments à ressort ($5_1$-$5_8$) par rapport au châssis de gyroscope et/ou un angle d'orientation des seconds éléments à ressort ($6_1$-$6_4$) par rapport aux premiers oscillateurs ($3_1$, $3_2$) peuvent être modifiés,
- un dispositif ($10_1$-$10_8$, $11_1$-$11_4$) avec lequel peuvent être déterminés des premiers signaux pour la vitesse de rotation et la distorsion de quadrature qui apparaissent à l'intérieur du premier résonateur ($70_1$) et des seconds signaux pour la vitesse de rotation et la distorsion de quadrature qui apparaissent à l'intérieur du second résonateur ($70_2$),
- des circuits régulateurs (60-67) grâce auxquels les orientations ou les intensités des champs électrostatiques sont réglées de telle sorte que les première et seconde distorsions de quadrature deviennent aussi faibles que possible, et
- une unité de calcul qui détermine à partir des premiers et seconds signaux la vitesse de rotation et, à partir d'une part de mode commun des champs électrostatiques qui compensent les première et seconde distorsions de quadrature, l'accélération à mesurer.

2. Gyroscope de Coriolis (1') selon la revendication 1, **caractérisé en ce que** les configurations des premier et second résonateurs ($70_1$, $70_2$) sont identiques, les résonateurs ($70_1$, $70_2$) étant disposés avec une symétrie axiale par rapport à un axe de symétrie (73) qui est perpendiculaire à l'axe d'oscillation commun (72).

3. Procédé pour mesurer sélectivement ou simultanément des vitesses de rotation et des accélérations en utilisant un gyroscope de Coriolis à vitesse de rotation (1') comportant un premier et un second résonateur ($70_1$, $70_2$) qui sont composés chacun, comme système couplé, d'un premier et d'un second oscillateur linéaire ($3_1$, $3_2$, $4_1$, $4_2$), les vitesses de rotation et les accélérations étant définies par captage et analyse des déviations des seconds oscillateurs ($4_1$, $4_2$), avec les étapes qui consistent à :

**EP 1 697 696 B1**

- provoquer l'oscillation des deux résonateurs ($70_1$, $70_2$) symétriquement l'un par rapport à l'autre le long d'un axe d'oscillation commun (72),
- comparer les déviations des seconds oscillateurs ($4_1$, $4_2$) afin de déterminer une part de déviation symétrique qui constitue une mesure pour la vitesse de rotation à mesurer, et/ou une part commune de déviation en mode commun qui constitue une mesure de l'accélération à mesurer,
- calculer la vitesse de rotation ou l'accélération à mesurer, à partir de la part de déviation symétrique ou de la part de déviation en mode commun,
- déterminer la part commune de déviation en mode commun de la manière suivante :

- définition d'une première distorsion de quadrature qui apparaît à l'intérieur du premier résonateur ($70_1$),
- définition d'une seconde distorsion de quadrature qui apparaît à l'intérieur du second résonateur ($70_2$),
- comparaison de la première distorsion de quadrature avec la seconde afin de définir une part commune de distorsion de quadrature qui est proportionnelle à l'accélération à mesurer et qui représente la part commune de déviation en mode commun.

4. Procédé selon la revendication 3, **caractérisé en ce que** des champs électrostatiques sont produits pour modifier l'orientation mutuelle des premiers et seconds oscillateurs ($3_1$, $3_2$, $4_1$, $4_2$) , l'orientation ou l'intensité des champs électrostatiques étant réglée de telle sorte que les première et seconde distorsions de quadrature deviennent aussi faibles que possible.

Fig. 1

Fig. 2

Fig.3

EP 1 697 696 B1

Fig 4

**EP 1 697 696 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0216871 A1